# EUROPEAN PATENT APPLICATION

(11) **EP 1 728 420 A1**
(43) Date of publication of application: **06.12.2006**
(21) Application number: 05701667.7
(22) Date of filing: 12.01.2005
(51) Int. Cl.: A01K 23/00

(54) **SPECIAL STRAP ASSEMBLY WHICH IS INTENDED TO PREVENT DOG EXCREMENT FROM BEING DEPOSITED IN PUBLIC AREAS**

(30) Priority: 23.03.2004 ES 200400910
(71) Applicant: Arcos Quinones, Antonio José, E-29631 Arroyo De La Miel (Malaga) (ES); Arcos Quinones, Pedro Jesus, E-29631 Arroyo De La Miel (Malaga) (ES); Jimenez Martin, Antonio, E-29631 Arroya De La Miel ( Malaga) (ES)
(72) Inventor: Arcos Quinones, Antonio José, E-29631 Arroyo De La Miel (Malaga) (ES); Arcos Quinones, Pedro Jesus, E-29631 Arroyo De La Miel (Malaga) (ES); Jimenez Martin, Antonio, E-29631 Arroya De La Miel ( Malaga) (ES)
(74) Representative: Carpintero Lopez, Francisco
(86) International application number: PCT/ES2005/000012
(87) International publication number: WO 2005/092088

(57) **Abstract**

The invention relates to a special strap assembly which is intended to prevent dog excrement from being deposited in public areas. The inventive assembly comprises an elastic strap which is fitted to the dog's hindquarters and which supports a singular piece (4) having characteristics which enable an excrement-collection bag to be connected thereto using a closed elastic rubber band. The invention consists of five elastic straps (1), (2) and (3) comprising length adjusters (5), which, together with the singular piece (4), form a single assembly which cannot come apart. Once the faeces have been deposited in the bag, the bag is removed from the singular piece (4), the elastic band being recovered, and sealed hermetically using an adhesive strip which is protected by a plastic band that is provided on one of the inner faces of the opening. The invention is essentially **characterised by** the specific characteristics of the singular piece, the number and arrangement of straps and the type of collection bag.

## Description

### FIELD OF THE ART

The invention is encompassed within the technical field of products related to pets, more specifically in relation to strap assemblies for dogs intended to prevent dog excrement from being deposited on the ground, depositing it in a bag.

### STATE OF THE ART

The demand for dogs as a pet has currently created real problems in reference to canine faeces, not just for their owners but also with greater intensity for citizens in general and for those in charge of city cleaning, especially in big cities. Reference is being made to the shared responsibility of keeping public areas clean with regard to dog excrement. It would be no exaggeration to add to the foregoing the multiple illnesses and infections that have been detected because of this deficiency, as well as hospital stays for people who fall as a result of stepping in animal faeces deposited in public areas.

There are many background documents in the art related to the problem considered above and with this invention, although it is understood that what has been published up until now does not comprise the technical and design requirements suitable for a product of this type to become practical and marketable due to its effectiveness, its simplicity, how easy it is to put on and take off the animal, its low production cost or even its appearance. It would therefore be desirable to obtain a special strap assembly ensuring that the animal's faeces are deposited in a bag coupled thereto and that this action can be done in a simple, clean and completely effective manner, which is not an easy task given the animal's anatomy and its sudden movements which can disarrange the different strap assembly elements, making it ineffective. An added difficulty is the fact that a dog's anus is very close to its tail, right under it, which enormously complicates arranging said bag as an excrement collector. It is further desirable for the faeces to be sealed hermetically in the bag so that no unpleasant odors or parasites can be released. After having studied the current state of the art, there is no proposal that is able to respond to the aforementioned in a global, simple, practical, effective and marketable manner.

To that end, this invention focuses on obtaining a special strap assembly that is fitted to the animal's body, mainly the its hindquarters, including a bag acting as a faeces collector, such that even when the dog's movements are sudden the initial position of the strap assembly elements does not change, maintaining their complete effectiveness at all times.

Therefore, the straps support a singular piece made of plastic or the like, the distinctive features of which allow fitting it to the dog's anatomy around the tail and anus and connecting thereto with the aid of an elastic rubber band in an easy, fast and effective manner a collection bag surrounding the dog's anus under the tail and characterised by having a narrow inner adhesive band allowing it to be sealed hermetically once the dog has defecated, unlike bags having two wide adhesive bands, on both inner faces of the bag for the purpose of being able to adhere it to a piece.

### DESCRIPTION OF THE INVENTION

The invention consists of a new special strap assembly which is for the most part fitted to the dog's hindquarters and has a singular piece made of plastic material or the like surrounding the animal's tail and anus which allows coupling a disposable plastic bag thereto that is supported by an elastic rubber band and can be hermetically sealed after use. Five elastic straps come from the singular piece (which shall be described below) that are adjustable in length: one of them comes from the upper part of the piece and is hooked to the dog's collar; two other straps, which are narrower in their initial portion, come from the lower part of the singular piece separate from one another, and each of them reaches the first strap described at a specific height of the dog's back, being fitted on the inner side of each of the dog's hind legs; the last two straps come from the sides of the singular piece and hook horizontally to the last two straps mentioned, allowing their vertical movement. All the straps together with the singular piece form a single assembly which cannot come apart.

These straps are characterised by not having clasps but rather adjusters that allow changing their length in order to be perfectly tightened on the dog's body and to support and keep the singular piece in place. The singular piece, made of plastic material or the like, has a special shape similar to a pulley with a hollow circular shaped center with two protuberances, a lower convex shaped protuberance and an upper concavo-convex shaped protuberance, leaving a recess between them in which a bag will be supported with an elastic rubber band. The part is perfectly adapted to the animal's body as a result of the convex shape of the lower protuberance, which is in contact with the animal's body. There are five projections in this protuberance with respective slots in which the five straps are hooked. On the other hand the concavo-convex shape of the upper protuberance spaces it from the lower protuberance, making it easier to couple or remove the bag from the singular piece. The upper protuberance is cut at its upper part, configuring at the two ends respective progressive tapers ending in a round shape like hooks. All the mentioned features make the singular piece have a suitable design for fulfilling its purpose.

The strap assembly is completed with a disposable plastic bag having as a special feature an adhesive with a protective plastic strip along half the inner perimeter of the opening, close to the latter, on one of the inner faces of the bag, said bag being fixed to the singular piece by means of a planar, closed elastic rubber band. Straps, singular piece, bag and elastic rubber band will be made in different sizes according to the dog's size.

### DESCRIPTION OF THE DRAWINGS

To better understand the description in this specification, several drawings have been enclosed which, by way of example, show a practical embodiment of the special strap assembly which is intended to prevent dog excrement from being deposited in public areas.

In said drawings, Figure 1 shows a general view of the special strap assembly in which it can be seen how the straps and singular piece are joined together forming a single assembly; Figure 2 shows the bag in which the adhesive strip can be seen in one of the inner faces next to the opening; Figure 3 shows the type of length adjuster that the straps comprise; Figure 4 shows how the special strap assembly looks once it has been placed on the dog's body, seen from the side and without the collection bag; Figure 5 shows how the special strap assembly looks on the dog's body seen from behind and without the collection bag; Figure 6 shows a top plan view of the singular piece; Figure 7 shows a cross section of the singular piece in which the convex and concavo-convex shapes of the lower and upper protuberances can be seen; Figure 8 shows a side-elevational view of the singular piece, arranged horizontally; Figure 9 shows a drawing of the singular piece arranged horizontally seen from above the piece; Figure 10 shows a drawing of the singular piece arranged horizontally seen from under the piece.

### DESCRIPTION OF A PREFERRED EMBODIMENT

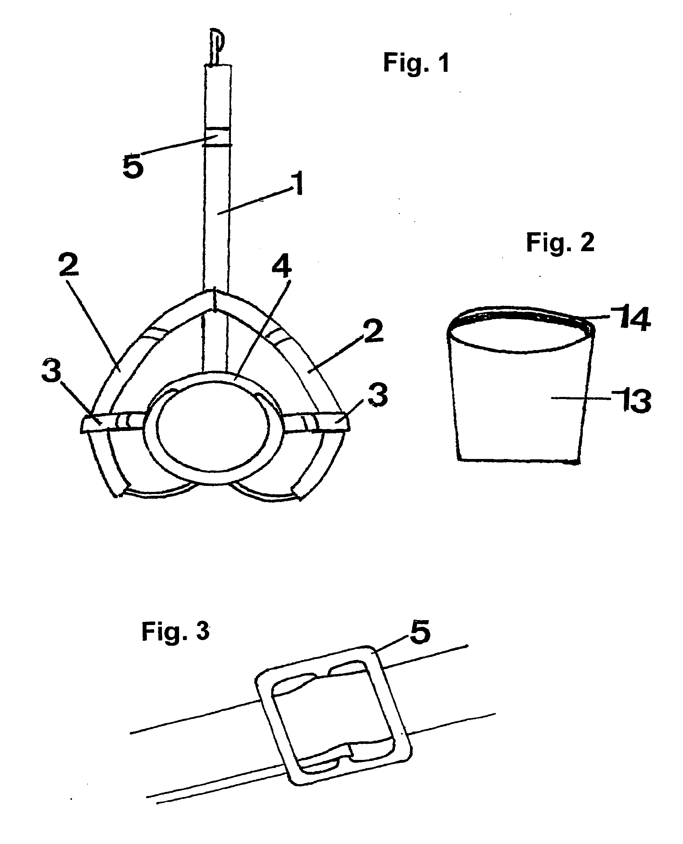

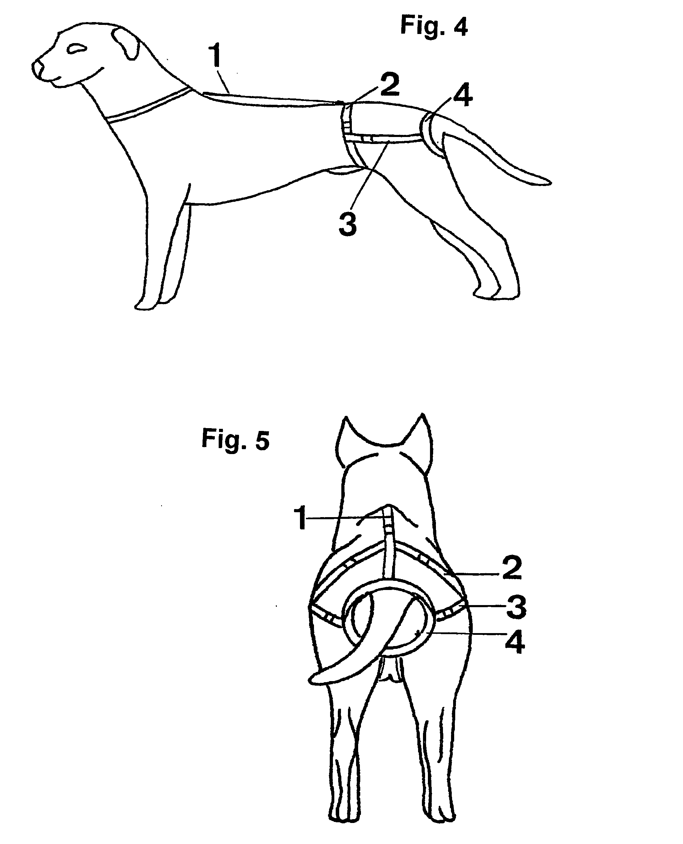

The special strap assembly which is intended to prevent dog excrement from being deposited in public areas consists of three different parts joined together: five elastic straps, a singular piece and a disposable collection bag. According to Figure 1, the strap assembly consists of five elastic straps having width and length that can vary according to sizes, with length adjusters (5) made of plastic or a similar material each of which is hooked at one of its ends in each of the slots (6) of the singular piece (4), as seen in detail in Figure 1, and joined to one another as shown in said Figure 1. A longer strap (1) comes from the upper part of the singular piece (4) and hooks in the collar on the dog's neck; two other elastic straps (2) come from the lower part of the singular piece (4) and are shorter and narrower in their initial part, at the outlet of the slots, for the purpose of better fitting the strap assembly to the dog's body and not causing the animal any discomfort in the genital area or hindering movement of its hind legs, being joined to the strap initially described at a specific height of the hindquarters of the dog's back, close to the tail; the last two straps (3), shorter than the previously mentioned straps, come from there sides of the singular piece (4) and are hooked to the two straps previously described at the height of the hind thighs with the possibility of vertical movement. The fixing and fitting of the strap assembly to the dog's body can be seen perfectly in Figures 4 and 5, which show a view of the positioning of the strap assembly from the side of the animal (Figure 4) and from behind it (Figure 5).

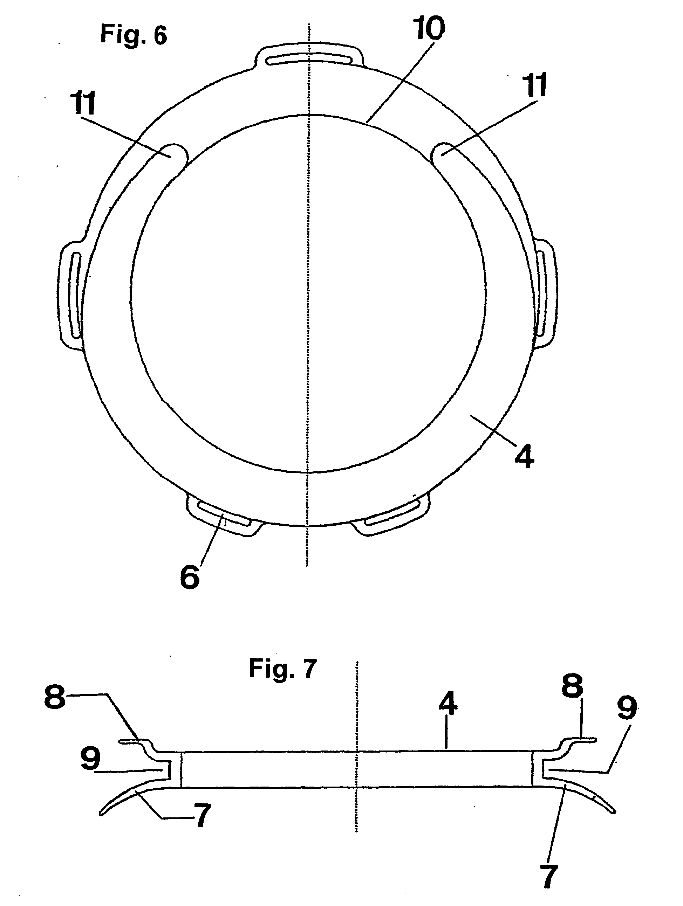

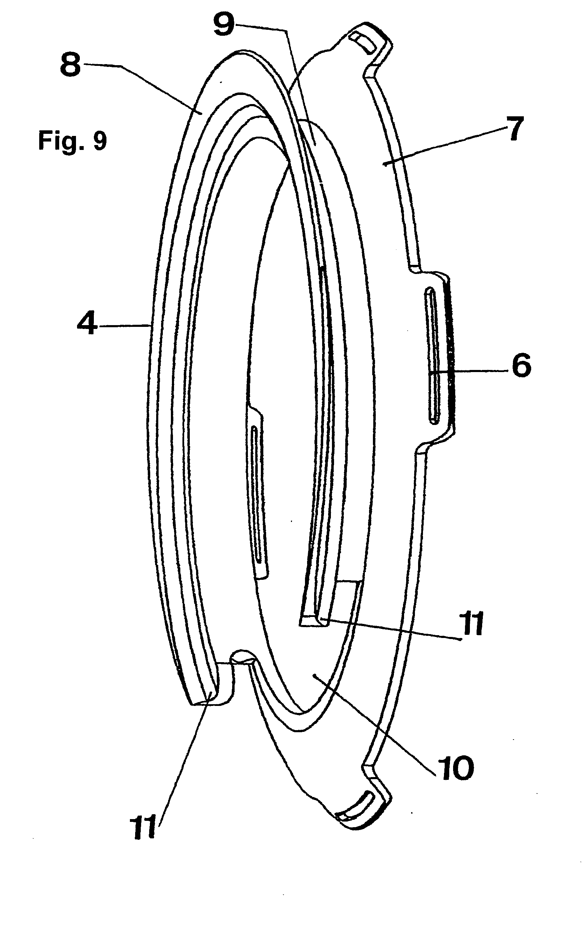

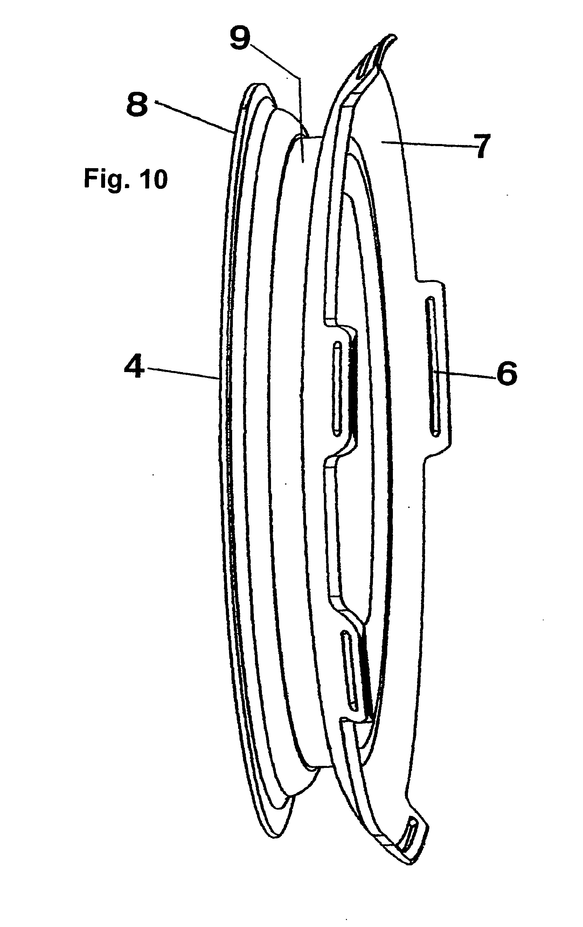

Figures 6, 7, 8, 9 and 10 show in detail the configuration of the singular piece (4). This singular piece (4), made of plastic material or the like, has a shape that is similar to a pulley, with a width and diameter that can vary according to size, with two protuberances or elevations, a lower one (7) and an upper one (8) between which there is a recess (9) that supports an excrement collecting bag (13) shown in Figure 2 and which will be described later.

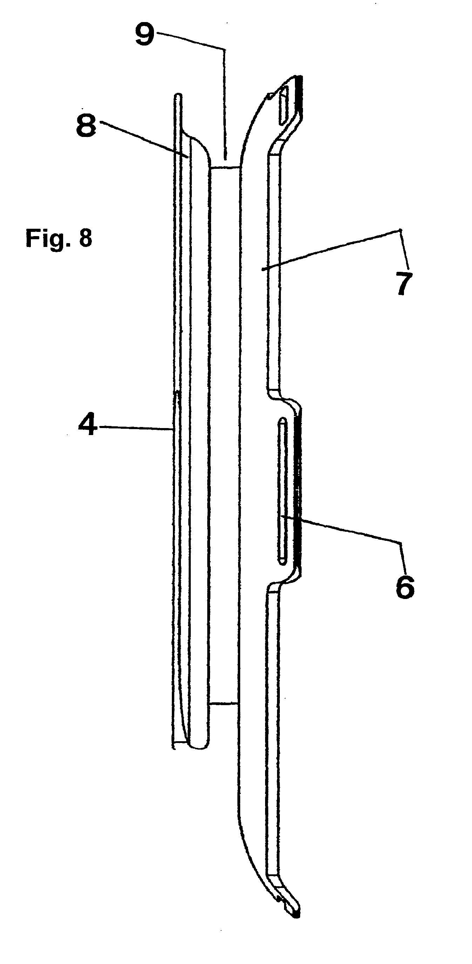

The upper protuberance (8), with a hollow and slightly concavo-convex surface, is cut at its upper part (10), as can be seen in Figures 6 and 8, configuring at the two ends respective progressive tapers ending in a round shape like hooks (11). The lower protuberance (7) has a slightly convex shape with the appearance of a cone frustum (like a funnel) which allows perfectly fitting the singular piece (4) to the dog's anatomy around the tail and anus. This latter protuberance has five projections with respective slots (6), shown in Figures 6, 8, 9 and 10, in which the ends of the five straps will be fixed.

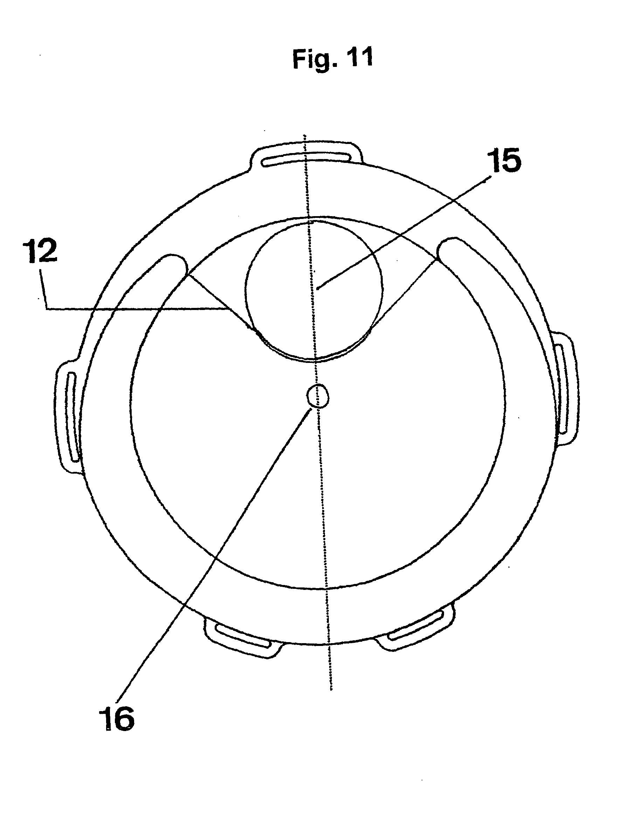

Figure 11 shows how the singular piece (4) surrounds the dog's tail (15) and anus (16), a plastic bag (13), shown in Figure 2, which acts as an excrement collection bag, being coupled thereto as a result of a planar, closed elastic rubber band (12) having a width, thickness and length that can vary according to size. Therefore, the bag (13) is safely supported on the singular piece (4), starting the coupling process in the previously mentioned hooks, and the upper part of the bag being immediately under the tail, forced by the elastic rubber band (12), and above the anus, overcoming the problem involved with a dog's anatomy because its anus is very close to its tail (right under it) with the difficulty of surrounding it with a collection bag. As has been sufficiently detailed in Figure 1, the elastic straps and the singular piece are joined together forming a single assembly which cannot come apart.

Finally, the third part of the invention consists of a bag (13), shown in Figure 2, having a size that can vary according to the dog's size and being disposable (single-use), having an adhesive strip (14) along half the internal perimeter of the opening and close to the latter, on one of the inner faces of the bag, with a plastic strip protecting it. Once the excrement is deposited in the bag, the bag is separated from the singular piece, recovering the elastic rubber band, and the protective strip is removed from the adhesive, allowing the bag to be sealed hermetically without allowing any bad odors or parasites to escape.

From the foregoing description and based on the drawings, the advantages of the special strap assembly which is intended to prevent excrement from being deposited in public areas can be seen with regard to other previous assemblies.

First it must be pointed out that it is a strap assembly with completely elastic straps provided with adjusters that allow varying their length and therefore adapting perfectly to the dog's anatomy, particularly to the hindquarters of the animal's body; both the number of straps and their arrangement are of vital importance. It must be pointed out that the two straps (2) starting in the lower area of the singular piece (4), as seen in Figure 1, are narrower in the area where they are attached to the singular piece (4), causing no discomfort in the animal's genital area nor any discomfort in the movement of the hind legs, while at the same time exerting together with the two side straps (3), having less length, the necessary tension so that the singular piece cannot change position once it is placed, which allows maximum effectiveness of the invention.

As a result of the shape of the singular piece (4), shown clearly in Figures 6, 7, 8, 9 and 10, with a lower convex protuberance, a perfect adaptation to the animal's anatomy is allowed, and with another upper slightly concavo-convex protuberance, it is possible to very easily, quickly and effectively couple and remove a plastic bag by means of an elastic rubber band, as both protuberances become farther apart from one another as their edges move away from the center of the piece, so precision is not required for both tasks, which is essential for the commercial success of the invention.

Likewise, the fact that the straps and singular piece form a single piece, i.e. a single assembly the elements of which cannot come apart, and with no clasps with nails or similar elements which are substituted with length adjusters, entails an evident improvement for facilitating and accelerating both the placement of the strap assembly on the dog and its removal or extraction. In fact, the removal is almost immediate by releasing the strap joined to the collar and pulling on it backwards, allowing the strap assembly to come off while the dog walks forward.

It is finally necessary to point out the hermetic sealing of the bag as a result of its inner adhesive strip, which isolates the dog's excrements, preventing bad odors and infections resulting from parasites from spreading.

All this makes this special strap assembly which is intended to prevent dog excrement from being deposited in public areas completely effective in operation. Nor should the aesthetic value of the strap assembly, its small volume and low cost of the materials used be ignored, being configured as a novel device that manages to combine handling simplicity with effectiveness and common sense, which is a determining factor for a product of these features to be used by many, i.e. to be marketable.

It is not considered necessary to extend this description so that a person skilled in the art may understand the scope of the invention and the advantages derived from it. The straps, singular piece, bag and elastic rubber band are susceptible to changes in size.

## Claims

1. A special strap assembly which is intended to prevent dog excrement from being deposited in public areas formed by a singular piece, straps and a faeces collection bag, essentially **characterised in that** the singular piece (4) has a shape similar to a pulley with two protuberances or elevations, a convex shaped lower protuberance (7), like a cone frustum, with five slots (6) in which the straps are supported, and another slightly concavo-convex shaped upper protuberance (8), between which there is a recess (9); the upper protuberance being cut in an area (10), configuring at the two ends respective progressive tapers ending in a round shape like hooks (11); this piece surrounding the animal's tail (15) and anus (16) and acting as a support for the excrement collection bag (13) as a result of a closed elastic rubber band (12).

2. A special strap assembly which is intended to prevent dog excrement from being deposited in public areas according to the previous claim, essentially **characterised in that** the strap assembly has five elastic straps having different lengths, all of them having length adjusters (5) without any clasps, all of them joined together and to the singular piece (4), forming a single assembly which cannot come apart in which a strap (1), longer than the other straps, has its origin in the upper part of the singular piece (4) and is fixed to the dog's collar; two equal straps (2) come from the lower part of the singular piece (4) and join together, passing through the inside of the animal's hind legs to the first strap (1) at the height of the back, both being narrower in the initial section; finally, two equal straps (3) and shorter than the previously mentioned straps come from the sides of the singular piece (4) and are hooked horizontally, allowing their vertical movement, to each of the previously described straps.

3. A special strap assembly which is intended to prevent dog excrement from being deposited in public areas according to the previous claims, essentially **characterised in that** the excrement collection bag (13), made of plastic and disposable, can be sealed hermetically because it has a narrow adhesive strip (14) with a protective plastic strip adhered to half the internal perimeter of the opening, on one of its inner faces, said bag being coupled to the singular piece (4) by means of a planar, closed elastic rubber band (12) which must be considered an element which is independent of said bag.
